# EUROPEAN PATENT APPLICATION

(11) **EP 1 543 952 A2**
(43) Date of publication of application: **22.06.2005**
(21) Application number: 04257785.8
(22) Date of filing: 15.12.2004
(51) Int. Cl.: B32B 27/12

(54) **Polymer coated web with good water vapor permeability**

(30) Priority: 20.12.2003 US 741854
(71) Applicant: Ahlstrom Windsor Locks LLC, Windsor Locks, CT 06096-2335 (US)
(72) Inventor: Carmody, Debra J., Wallingford CT 06492 (US); Viazmensky, Helen, Avon CT 06001 (US); Nyberg, Bernth L., Varnamo S-33054 (SE); Persson, Bengt J., Lund S-222 24 (SE)
(74) Representative: Mercer, Christopher Paul

(57) **Abstract**

A composite material which is suitable as a wall covering comprises a substrate layer that is permeable to water vapor, such as a nonwoven web material made from cellulose and synthetic fibers, and that is coated, preferably extrusion coated, with a plastics material. In one embodiment the plastics material comprises an olefin polymer, olefin copolymer or blend of olefin (co)polymer and a particulate filler, e.g. calcium carbonate or a mixture thereof with titanium dioxide. In another embodiment the plastics material is a microporous breathable polymer film or a monolithic breathable polymer film.

## Description

### Cross reference to related applications

This application is based on a continuation-in-part application of U.S. application no. 10/031,350, filed on 4/18/2002, which is a 371 of International application no. PCT/GB00/02832, filed on 7/21/2000, which claims the benefit of EP application no. 99305768.6, filed on 7/21/1999, the contents of each of which are incorporated by reference herein.

### Field of the invention

The present invention relates to a composite material, especially a laminate material, that comprises a substrate layer and a coating layer that comprises a plastics material. The invention relates, especially to such a composite material that is permeable to water vapor and can be used as or in a wall covering.

### Background to the invention

Many uses exist for water-vapor-permeable composite materials which have a degree of water resistance. Typical applications include diaper cover sheets, 'breathable' clothing, wrapping for prefabricated building components, wallcoverings and medical drapes and gowns. Many constructions of such composites have been proposed, usually comprising a paper, nonwoven or textile substrate which is coated with a polymeric film that has been processed to enable that film to be water-vapor permeable. One method is to form the film, then perforate it and laminate it to the substrate web; this is a complex process involving several steps. US-A-5 089 075 (Sonada), however, describes an extrusion laminating process in which the cooling roll has a modified surface that perforates the film.

Other methods employ means for providing discontinuities in the polymeric film so that if the film is stretched then pores are created. Typically, the discontinuities are created by incorporating mineral fillers into the polymeric composition before film forming. A method of forming such films is described in EP-A-0 605 831 (Yamamoto et al, assigned to Mitsubishi Petrochemical Co. Ltd.). Also, WO-A-97/29909 (Wu et al, assigned to Clopay Plastic Products Co., Inc.) describes a process in which a thermoplastic film containing pore forming fillers is extrusion coated onto a nonwoven and then stretched. These methods all require the film or composite to be stretched (various other methods of carrying out the stretching can be found in the prior art) after coating, creating an extra stage in the process.

US-A-5 262 444 (Rusincovitch et al) describes a method for the production of a wall covering in which a low boiling point additive (e. g. water) is added to a plastisol comprising a curable plastic and a plasticiser before extrusion of the plastisol onto a substrate, e. g. paper. The resultant coating is then cured under conditions such that the low-boiling point additive vaporizes and creates voids in the film.

In GB-A-2 271 519 (Kano, assigned to Toyokasei Co. Ltd.) there is described a means of creating a permeable layer in a composite product. In this case particulate materials are incorporated into a polymeric resin which is applied to a nonwoven using an automatic spray gun or painting robot. This process produces a relatively thick coating, is relatively slow and the use of spray application methods will often result in an uneven coating.

EP-B-734,321 (Kimberly-Clark Worldwide Inc.) discloses a laminate that comprises a film formed from a blend containing, on a dry weight basis relative to the total weight of the film, from 10 to 68% of a predominantly linear polyolefin polymer, for example a linear low-density polyethylene; from 30 to 80% of a filler, for example calcium carbonate, generally having an average particle size of from 0.1 to 7 micrometers; and from 2 to 20% of a bonding or tackifying agent, which may be selected, for example, from various hydrogenated hydrocarbon resins, petroleum hydrocarbon resins, polyterpene resins, ethylene-propylene rubber (EPR) and olefinic thermoplastic polymers in which EPR is dispersed in polypropylene or a polypropylene/polyethylene blend. Once the film has been formed, it is stretched in order to render it porous and breathable; in particular, the film should have a water vapor transmission rate of at least 100 g/m²/24 h. The stretched film is then bonded to a fibrous polyolefin nonwoven web, for example a spun bonded polypropylene web. The bonding of the film to the web may be effected by thermal bonding, in particular by using heat and pressure as with heated, patterned bonding rolls or using ultrasonic bonding means. It is suggested that the bonding agent can alternatively be added to the fibrous nonwoven web. The laminate may find use as a replacement for plastic films used as backing sheets in such absorbent products as diapers.

WO-A-98/02609 (Kimberly-Clark Worldwide Inc.) discloses a reinforced film comprising a film layer that is oriented in a direction of stretching and that has an effective gauge of 0.6 mil (15.24 gm) or less. The film layer is formed from a blend including, on a weight basis relative to the total weight of the film layer, from 30 to 70% of a polyolefin polymer, from 70% to 30% of a filler and, optionally, up to 20% of a second polyolefin polymer, the film layer having a water vapor transmission rate of at least 300 g/m²/24 h. A pattern of adhesive areas is applied to a surface of the film layer, these adhesive areas having an add-on amount of from 0.1 to 20 g/m², a percentage bond area of from 5% to 50% per unit area of said surface, and a maximum spacing between adhesive areas, in a direction generally parallel to the said direction of stretching, of 1 inch (25.4 mm) or less. A suitable polyolefin polymer is linear low-density polyethylene. A suitable filler is calcium carbonate, which may be coated with stearic acid. The adhesive may, for example, be a conventional hot melt adhesive, pressure sensitive adhesive or reactive adhesive; block copolymer-type construction adhesives, ethylene vinyl acetate-based adhesives and amorphous alpha-olefin copolymer and terpolymer-based adhesives are mentioned. Although the primary function of the pattern of adhesive areas is to reinforce the film layer, the adhesive can be selected so that it remains tacky for a sufficient period of time to allow it to bond the surface of the film layer to a surface of an adjacent layer such as a nonwoven web or fabric. The film may find use as an outer cover in personal care absorbent articles such as diapers.

A commonly used type of wallcovering is the so-called 'vinyl' wallpaper which is normally a polyvinyl chloride (PVC) plastisol coated paper. Though this material can be used for a wide range of wallcovering applications, it is particularly used in areas where good durability and washability are required in both residential and commercial applications. However, the use of PVC does create some problems: in the coating and subsequent printing process it is necessary to have emission control equipment and the wallcovering itself is not flame retardant and emits hydrochloric acid and dense smoke when exposed to flame. When based on paper, the wall covering is neither particularly dimensionally stable nor is it strippable when redecoration is carried out. The raw materials comprising PVC can emit undesirable volatile organic compounds during production and use.

In the wallcover market, concerns have also been expressed regarding the impact of the use of PVC on the environment and on health, motivating the search for alternative materials. Also, moisture from the wall cavity can not pass through PVC coatings. Thus moisture can be trapped behind PVC coated wallcoverings, providing a breeding ground for mold and mildew in damp or damaged environments.

It could be imagined that other polymer coatings might overcome these problems but such coatings have a major disadvantage themselves; they have a very low water vapor permeability (WVP), which may be measured as the water vapor transmission rate (WVTR). Thus, when the wallcover is hung using water-based adhesives, which is the common method, the wallcovering is very slow to dry and is subsequently prone to mold growth.

### Definitions

Breathable polymer film - A breathable polymer film are those polymer films with a high permeability for water vapor but not necessarily with a high permeability for oxygen or carbon dioxide. The greater the potential moisture concentration gradient, the stronger the impetus of the water vapor transmission process and the higher the water vapor transmission rate (WVTR). As used herein a breathable polymer film will have a WVTR of at least 20 g/M²/24 h when tested according to ASTM 96E; upright cup at 50 % relative humidity (RH) and 70 °F.

Cellulose fibers - cellulosic fibers from manmade sources (for example, regenerated cellulose fibers or lyocell fibers) or natural sources such as fibers or pulp from woody and non-woody plants. Woody plants include, for example, deciduous and coniferous trees. Non-woody plants include, for example, cotton, flax, esparto grass, sisal, abaca, milkweed, straw, jute, hemp, and bagasse.

Cross machine direction (CD) - The direction perpendicular to the machine direction.

Denier - A unit used to indicate the fineness of a filament. The unit expresses the mass of a filament divided by its length, with a filament of 1 denier having a mass of 1 gram for 9000 meters of length.

Fiber - A material form characterized by an extremely high ratio of length to diameter. As used herein, the terms fiber and filament are used interchangeably unless otherwise specifically indicated.

Filament - A substantially continuous fiber. As used herein, the terms fiber and filament are used interchangeably unless otherwise specifically indicated.

Machine direction (MD) - The nonwoven web material direction parallel with the direction of travel of the forming surface onto which fibers are deposited during formation of that nonwoven web.

Microporous breathable polymer film- A film such as those constructed from stretched polytetrafluoroethylene (PTFE), diverse polyolefins, some polyesters, or precipitation-cast polyurethane. Microporous breathable polymer film may or may not include filler material. The micron sized pores in these films are invisible to the unassisted eye and prevent the penetration of liquid water, but the interconnected pore structure allows for transmission of water vapor.

Monolithic breathable polymer film - A typically non-porous, polymer film through which small molecules such as air constituents-including water vapor-can pass. The nonporous monolithic films transport water molecules by molecular diffusion through the polymer matrix, using a difference in partial water-vapor pressure across the film as the driving force. As used herein a monolithic breathable film excludes porous or microporous films.

Non-breathable polymer film - Any polymer film that does not fall within the definition of breathable polymer film. As used herein a non-breathable polymer film will have a WVTR of less than 20 g/M²/24 h when tested according to ASTM 96E; upright cup at 50 % relative humidity (RH) and 70 °F.

Non-thermoplastic polymer - Any polymer material which does not fall within the definition of thermoplastic material.

Nonwoven fabric, sheet or web - A material having a structure of individual fibers which are interlaid, but not in an identifiable manner as in a woven or knitted fabric. Nonwoven materials have been formed from many processes such as, for example, meltblowing, spunbonding, carding and water laying processes. The basis weight of nonwoven fabrics is usually expressed in grams per square meter (gsm) and the fiber fineness is measured in denier.

Polymer - A long chain of covalently bonded, repeating, organic structural units. Generally includes, for example, homopolymers, copolymers, such as for example, block, graft, random and alternating copolymers, terpolymers, etc, and blends and modifications thereof. Furthermore, unless otherwise specifically limited, the term "polymer" includes all possible geometrical configurations. These configurations include, for example, isotactic, syndiotactic and random symmetries.

Regenerated cellulose - Manmade cellulose obtained by chemical treatment of natural cellulose to form a soluble chemical derivative or intermediate compound and subsequent decomposition of the derivative to regenerate the cellulose. Regenerated cellulose includes spun rayon and regenerated cellulose processes include the viscose process, the cuprammonium process and saponification of cellulose acetate.

Staple fiber - A fiber that has been formed at, or cut to, staple lengths of generally one quarter to eight inches (0.6 to 20 cm).

Tex - A unit used to indicate the fineness of a filament given by the weight in grams for 1,000 meters of filament. A filament of 1 tex has a mass of 1 gram for 1,000 meters of length.

Thermoplastic - A polymer that is fusible, softening when exposed to heat and returning generally to its unsoftened state when cooled to room temperature. Thermoplastic materials include, for example, polyvinyl chlorides, some polyesters, polyamides, polyfluorocarbons, polyolefins, some polyurethanes, polystyrenes, polyvinyl alcohol, caprolactams, copolymers of ethylene and at least one vinyl monomer (e.g., poly (ethylene vinyl acetates) and cellulose esters.

### Summary of the invention

The present invention, in one of its aspects, now provides a composite material comprising a substrate layer and a coating layer, wherein the coating layer comprises a plastics material. In some embodiments the plastics material is selected from olefin polymers, olefin copolymers, blends of olefin (co) polymers and mixtures of two or more of these, the said plastics material having particles of filler therein. In other embodiments the plastics material comprises a monolithic breathable polymer film or a combination of a monolithic breathable polymer film and a non-breathable polymer. In this embodiment the plastics material does not typically include particles of filler therein although the addition of such filler particles is possible. The substrate layer may be a nonwoven web and is advantageously a wetlaid nonwoven web. In general, the said substrate layer and the said coating layer are each permeable to water vapor as is the composite material formed therefrom. In certain embodiments no further layer is included; however, in other embodiments, any additional layer will generally also be permeable to water vapor.

The present invention, in another aspect, also provides a process for the production of a composite material, which process comprises applying a coating formulation as a coating layer on a substrate layer, the coating layer and substrate layer being permeable to water vapor. In some variations the coating formulation comprises a plastics material that is a monolithic breathable polymer film. In other variations the coating formulation comprises a plastics material that is selected from olefin polymers, olefin copolymers, blends of olefin (co) polymers and mixtures of two or more thereof and has particles of filler therein.

The present invention, in yet another aspect, also provides a coating formulation that comprises a plastics material. In some variations the coating formulation comprises a plastics material that is a monolithic breathable polymer film. In other variations the coating formulation comprises a plastics material that is selected from olefin polymers, olefin copolymers, blends of olefin (co) polymers and mixtures of two or more thereof and that has particles of filler therein. The coating formulation may, of course, contain one or more other components: in certain preferred embodiments, however, it consists essentially of the plastics material and the filler. The filler may be a single material or a mixture of different materials.

In further aspects, the present invention also provides the use of the said composite material as a wall covering. Thus, the invention provides the said composite material for use as a wall cover material and also provides a method of covering a wall surface that comprises applying to it a composite material of this invention.

In certain embodiments the inventive polymeric film coated wall covering can be easily printed and is durable and cleanable. Use of a nonwoven web as a substrate layer provides a composite material that is dimensionally stable. This dimensional stability makes the inventive wallcoverings less susceptible to shrinkage during installation and helps removal of the applied inventive wallcovering. Advantageously, the plastics material used does not emit volatile organic compounds and can be applied at a lighter coating weight than is typical for PVC coatings, producing less waste in production and during disposal of the product. The inventive wallcovering is also moisture breathable, lessening the chance of trapping water behind the wallcovering and subsequent mold or mildew growth.

In general, the composite material of the invention may be alternately formulated to comprise, consist of, or consist essentially of, any appropriate components herein disclosed. The composite material of the invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

### Description of exemplary embodiments of the invention

When the substrate of the composite is a nonwoven, it is preferably wetlaid. The wetlaid nonwoven may be single or multiple phase. Nonwovens used as the substrates will generally comprise natural, in particular cellulose, fibers and/or synthetic fibers, the latter expression including fibers of organic polymers or copolymers such as polyesters. Thus, the nonwovens can comprise woodpulp fibers, preferably both softwood and hardwood pulp fibers, and short cut polyester fibers.

Additionally a filler, especially calcium carbonate, is preferably incorporated in the web to provide high opacity. The nonwoven can be bonded with a resin binder formulation, especially an acrylic resin or vinyl acetate resin formulation. The fiber length and linear density of the polyester fibers should be chosen to give good web uniformity and will, typically, be in the range 5 to 20 mm and 1.0 to 6.0 denier (9 to 54 tex) respectively. The woodpulps should be chosen to provide a good combination of strength, opacity and coating performance; their choice should preferably also recognize current environmental concerns.

Typical formulations for one embodiment of the nonwoven are 20 to 40% pulp (preferably 10 to 20% softwood pulp, 10 to 20% hardwood pulp), 10 to 20% synthetic (preferably polyester) fiber, 25 to 35% calcium carbonate, the percentages being by weight of the nonwoven on a dry weight basis, the remainder preferably comprising a binder. The binder should preferably be applied though a spray application or size press and preferably at a level to give between 15 to 20% solids in the finished substrate. The grammage (basis weight) of the substrate is advantageously in the range of about 30 to about 200 g/m². The substrate will, in certain preferred embodiments, have a thickness of from 40 to 500 um, more preferably at least 80 um, for example up to 300 um.

In another embodiment the substrate is a wetlaid, single or multiple phase nonwoven web. Multiple phase webs and a method for their preparation are described in U.S. Patent Number 2,414,833, the contents of which are incorporated by reference herein. The inventive nonwoven web comprises about 30 percent to about 40 percent synthetic, staple length fibers and about 60 percent to about 70 percent cellulose fibers. The substrate in this embodiment will advantageously have a basis weight of about 70 g/m² to about 165 g/m². Advantageously, the substrate is a wetlaid, two phase nonwoven web. Typically, the top phase will comprise predominately cellulosic fibers and the bottom phase will comprise synthetic and cellulosic fibers. The cellulose fibers are advantageously hard wood fibers, softwood fibers, softwood pulp or a combination thereof. The length and linear density of the synthetic fibers should be chosen to give good web uniformity and strength and will, typically, be in the range 5 to 40 mm and 1.0 to 20.0 denier (9 to 180 tex) respectively. The synthetic fibers are advantageously polyester fibers. A filler, for example clay, calcium carbonate, titanium dioxide or a combination thereof, may be incorporated in the web to provide high opacity if desired. The nonwoven can be bonded with a resin binder formulation, especially an acrylic resin or vinyl acetate resin formulation.

Other substrates include papers, e. g. papers that are conventionally used as wallcovering substrates, and spunbonded, SMS and hydroentangled nonwovens. ("SMS" is a conventional acronym for a nonwoven composite comprising layers of spunbonded (S), melt blown (M) and spunbonded (S) webs.) Paper substrates may be exemplified by "Cresta Print M" and "Cresta Print F1" from Metsa-Serla Paperboard. ("Cresta" is understood to be a registered trade mark.)

In one embodiment the plastics material (which expression herein includes synthetic resins and synthetic polymeric materials) is preferably a polymer or copolymer of a C2-C4 olefin, especially of ethylene or propylene, or a blend comprising such a polymer or copolymer.

Suitable co-monomers are C1-C4 alkyl acrylates or C1-C4 alkyl methacrylates. A particularly preferred plastics material is a copolymer of ethylene and n-butyl acrylate; such copolymers are described by L. K. Johnson, "Ethylene n-Butyl Acrylate Copolymers for Extrusion Coating and Lamination Applications", Polymers, Lamination and Coatings, a TAPPI PRESS Anthology of Published Papers, 1986-1991, pages 248-252.

The particulate filler distributed or dispersed (preferably uniformly distributed or dispersed) in the plastics material is preferably a mineral or inorganic filler, especially calcium carbonate and/or titanium dioxide. Other mineral fillers may come into consideration, e. g. talc, kaolinite, alumina trihydrate, feldspar or silica. Typical particle sizes of the fillers are in the range of from 0.1 to 10 um, e. g. from 0.5 to 7 um.

In general, the amount of particulate filler will be 40% or less, relative to the weight of filled plastic material: preferably the amount of filler will be 35% or less, more preferably 30% or less. In general, the mineral filler will be used in an amount effective to achieve a good water vapor permeability. Usually, the amount of mineral filler in the filled plastics material will be 2% or more, preferably at least 5%, more preferably 10% or more and most preferably at least 20% by weight.

Preferably, the particulate filled plastic material has a water vapor transmission rate of at least 14 g/m² per 24 h at 25 C/75% RH (relative humidity) as measured on the unfilled plastic material at a mass per unit area of 45 g/m². The composite comprising the substrate layer and the coating of filled plastics material preferably has a water vapor transmission rate of at least 30 g/m² per 24 h at 25 C/75% RH.

Typical formulations for the plastics material are mixtures or alloys of an ethylene butyl acrylate copolymer (EBA) comprising 60 to 70% EBA, 20 to 30% calcium carbonate and 5 to 10% titanium dioxide, percentages being by weight of the mixture or alloy.

In another embodiment the plastics material is a monolithic breathable polymer film. Advantageously, the monolithic breathable polymer film comprises, for example, at least one of ethyl methyl acrylate (EMA), polyester, co-polyester or polyurethane. Some examples of suitable materials are Lotryl 20 MA 08 and Lotryl 20 MB 08, both examples of EMA available from Atofina and Eastar Bio Gp Copolyester available from Eastman Chemical Company. The plastics material may also be a combination of a monolithic breathable film and a non-breathable polymer, although water vapor transmission of such a combination will be lessened. Filler materials in the polymer film are not required in this embodiment. The plastics material of this embodiment is substantially continuous.

The plastic material can be applied to the substrate by any appropriate coating method. Extrusion is the preferred method, for example conventional flat die extrusion. Extrusion coating techniques are well known: see for example, Modern Plastics Encyclopaedia 1980-1981, McGraw-Hill Inc. pp. 253-256. Moreover, other methods, such as knife coating, roll coating or transfer coating may come into consideration. The monolithic breathable film may be applied to the nonwoven substrate by extrusion coating, a laminating process using heat or adhesive or other known methods. Advantageously, the monolithic breathable film is applied to the substrate by extrusion coating and without the use of adhesives. The application of the monolithic breathable film to the substrate is performed in a one step process with no need for additional stretching or perforating steps to produce a breathable composite product.

In certain preferred embodiments the coating layer will have a thickness of from 10 to 50 um and advantageously from about 13 um to about 26 um. The lower coating thicknesses will maximize breathability and minimize cost. Heavier coating thicknesses will decrease breathability. Typically the basis weight (grammage) of the polymer layer is from 5 to 50 g/m², advantageously from 10 to 50 g/m².

One preferred embodiment of the invention is a composite material comprising a wetlaid nonwoven web formed from woodpulp and polyester fibers into which is incorporated calcium carbonate bonded with resin. This nonwoven web is then extrusion coated with a polymer layer consisting of ethylene butyl acrylate, calcium carbonate and titanium dioxide.

Another preferred embodiment of the invention is a composite material comprising a wetlaid, two phase nonwoven web having a basis weight of about 70 to about 165 g/m². A minor portion of the nonwoven web is a top phase comprising cellulosic fibers and a major portion of the nonwoven web is a bottom phase comprising cellulosic fibers and polyester fibers. The fibers in the nonwoven web are bonded with resin. The nonwoven web is extrusion coated with a monolithic breathable film at a thickness of about 10 um to about 26 um. In this preferred embodiment the material can provide a breathability of > 8 Perm and a WVTR of at least 20 g/M²/24 h when tested according to ASTM 96E; upright cup at 50 % relative humidity (RH) and 70 °F. The composite material surface is not disrupted, stretched or perforated during production and is smooth, continuous and printable. When used as a wallcovering, the composite material has good wet dimensional stability to prevent seam splitting after hanging and sufficient strength to allow, with correct wall primer and adhesive choice, dry stripping of the wallcovering. This composite material can provide a wallcover material meeting the requirements of residential and contract wallcover material.

In a particular application of the invention, a composite nonwoven is used as a base for a wallcovering that can be embossed and/or printed to give the required decorative effects. A nonwoven web, extrusion coated with a polymer, copolymer, polymer alloy or monolithic breathable polymer, according to the invention will have many advantages over the prior art and overcomes a major problem with many other extrusion coated materials in that the material of the invention is permeable to moisture vapor so that drying of the hung wallcovering is not impeded.

The advantages of the composite nonwoven compared with the prior art, particularly the polyvinyl chloride coated papers, are that the composite nonwoven is fast drying and, because it is breathable, mold growth is eliminated; since the composite is PVC free, there is no need for emission control equipment to be installed at the extrusion coating process nor in the subsequent printing processes; it is also odorless in use; the composite has a smooth surface so that it has good rotogravure printability; it is also hot or cold embossable; the coating layer can be applied in a thickness conventionally accepted in the wall cover art, that is to say excessively thick layers are not required; adequate permeability may be achieved without the need for the addition of special low-boiling point additives, such as water or blowing agents; the composite is flame retardant and there is no smoke release on burning; the composite is dimensionally stable so that there is no seam separation and paperbased complexes are more dimensionally stable than those of the prior art; hanging of the wallcover is facilitated by the good lay-flat properties, ease of cutting and strippability; following the extrusion step and, if required, a curing step, there is no need for an additional processing step; in particular there is no need for a special stretching step or perforation step in order to achieve the requisite permeability to water vapor. In certain preferred embodiments the composite material during its manufacture is not subjected to any substantial stretching, in either the machine direction (MD) or the cross direction (CD).

Thus, in each of said directions, the composite material will normally be stretched by not more than 3 percent, preferably by not more than 2 percent, more preferably by not more than 1 percent, and most preferably there is essentially no stretching. Accordingly, the manufacturing equipment will generally be run at zero MD stretch and with no applied CD stretch. It is not precluded that in certain embodiments some shrinkage might occur in at least one direction.

The composite or laminate materials of the present invention will also come into consideration for other uses, for example in medical drape and gown materials.
Test methods.
   - Grammage:: ISO 536
Appearance: A visual assessment against standard samples;
   1 = unacceptable
   2 = accepted with major remarks.
   3 = accepted with minor remarks.
   4 = totally acceptable.
Curl: Measured in mm. deviation from a flat surface after making an X-cut with the arms of the X being 160 mm long and at 45 to the machine direction.
Pinholes: Bendtsen porosity measured according to ISO 8971-4 after the sample is treated at 150 C for one minute. If there is zero porosity "OK" is reported.

Water vapor transmission rate (WVTR), measured according to DIN 53122, expressed as g/m² per 24 hrs at 25 C and 75% RH. Water vapor transmission rate may also be measured according to ASTM 96E and expressed as g/m2 per 24h. ASTM method 96E is believed to be substantially the same method as DIN 53122. ASTM method 96E also includes methods of converting readings taken at one temperature or relative humidity to Perm or readings at another temperature and/or relative humidity.
Opacity: Elrepho %, measured according to SCAN P-3: 75.
Fire rating and smoke intensity: SIS 02 48 23.
Nicotine stain: degree of yellowing when subject to tobacco smoke expressed as the % increase in the b value of the L a b color measurements.
Dimensional stability: the % increase in length in the cross direction after 10 minutes of a 100 mm square sample pasted to a plaster board surface.
Strippability: the % of the sample remaining on a plaster board substrate after an attempt to pull the sample off 14 days after it had been pasted to the substrate.
Grab tensile: grams, measured according to ASTM D-5034.
Elmendorf tear: grams, measured according to ASTM D 5734.
Breathability: Perm, measured according to ASTM 96 E; upright cup at 50% relative humidity and 70°F standards set by the Wallcover Association)
24 Hour Staining: measured according to ASTM F-793 with additions as noted.
Scrubbability measured according to ASTM F-793 with additions as noted.

### Examples.

The invention is illustrated by means of the following examples, in which reference is made to the above test methods.

### Example 1.

A 70 g/m² nonwoven substrate comprising a fiber blend of 40% 1.7 denier (15.3 tex), 15 mm precision cut polyester fiber and 60% wood pulp bonded with a vinyl acetate resin binder such that the total fiber content was 80% and the binder content was 20%, was extrusion coated with 40 g/m² of a polymer alloy comprising 70% ethylene n-butyl acrylate copolymer (EBA) (Borealis grade 6417), 25% calcium carbonate (particle size 2-5 microns) and 5% titanium dioxide (particle size 2-5 microns). For the extrusion, the melt temperature was in the range 280-300 C and the length to diameter ratio for the screw was greater than 26. The test data are shown in Table 1.

### Example 2.

This example is the same as Example 1 except that the extrusion coating was 30 g/m². The test data are again shown in Table 1.

### Example 3.

The same substrate as in Example 1 was extrusion coated with 40 g/m² of a polymer alloy comprising 60% EBA, 30% calcium carbonate and 10% titanium dioxide. This particular polymer alloy gave very inferior extrusion performance, probably because the filler content was too high. Test measurements were not made.

**Table 1**

| Property | Example 1 | Example 2 |
|---|---|---|
| Grammage (g/m²) | 111 | 101 |
| Delamination | no separation | no separation |
| Appearance | 3 | 3 |
| Curl MD | 2-3 | 2-3 |
| Curl CD | 0 | 0 |
| WVTR (g/m² per 24 hrs) | ~ 50 | ~ 50 |
| Elrepho opacity (%) | 76.7 | 75.5 |

The test data demonstrate that materials made by the methods of Examples 1 and 2 provide good WVTR and can be produced with no difficulty using conventional extrusion coating processes. The opacity results were less than is normally required for wallcover applications so for this end use a substrate containing filler will commonly be required. An example with such a substrate is provided in Example 5.

### Example 4.

Because the polymer compositions in Examples 1 and 2, based on EBA, gave such good results, evaluations of other polymers were carried out. In these cases the polymer blend contained no fillers and a 145 g/m² nonwoven substrate was used (Though the grammage of the substrate was much higher than in the previous examples, it was very porous and would not have affected the WVTR results significantly.)

The extrusion coating coat weight was 45 g/m² and the polymers tested were:
Example 4a EBA (standard)
Example 4b Ethylene methyl acrylate (EMA)
Example 4c Low density polyethylene (LDPE)
Test data are included in Table 2.

**Table 2**

| Property | Example 4a | Example 4b | Example 4c |
|---|---|---|---|
| Delamination | no separation | no separation | no separation |
| Appearance | 4 | 4 | 4 |
| Pinholes | OK | OK | OK |
| Water Test | OK | OK | OK |
| WVTR (g/m² per 24 hrs) | 14.2 | 8.8 | 1.9 |

This series of comparative tests of different polymers shows that EBA is to be preferred for high WVP. Comparison of Example 4a with Examples 1 and 2 demonstrates the synergistic effect of fillers on WVTR. The results also suggest that in order that a minimum WVTR of 30 g/m² per 24 hrs shall be achieved with a filled composition, the polymer itself should have a WVTR of 14 g/m² per 24 hrs at a mass per unit area of 45 g/m².

### Example 5.

An 115 g/m² polyester/woodpulp nonwoven (Dexter grade 11877) was extrusion coated as in Example 2. Test data are included in Table 3 and compared with a typical prior-art vinyl coated product.

**Table 3**

| Property | Example 5 | prior art vinyl |
|---|---|---|
| Grammage | 140 | 180 |
| Fire rating | class II | class II |
| Smoke intensity | no smoke | 8° max |
| WVTR (g/m² per 24 hrs) | 30-70 | 25-55 |
| Nicotine stain (%) | 70 | 220 |
| Dimensional stability (%) | 0.07 | 0.78 |
| Strippability (% release) | 100 | 0 |
| Elrepho opacity (%) | 97 | 96 |

The overall superior performance of the example of the invention as a wall covering over that of the prior-art is clearly illustrated in the table.

### Example 6.

A 130 g/m² two phase nonwoven was prepared. The top phase comprised 14 percent (about 13 g/m²) of cellulosic hardwood fibers. The bottom phase comprised 50 percent (about 65 g/m²) of a mix of hardwood fibers and 1.5 denier x 12 mm polyester fibers. The nonwoven comprised 20 percent (about 23 g/m²) of fillers (clay, CaCO₃ and TiO₂ and 20 percent (about 23 g/m²) of vinyl acetate binder (070131 available from Texaco).

Samples of the two phase nonwoven were extrusion coated with EMA (Lotryl 20 MA 08 or Lotryl 20 MB 08 by Atofina) or Co-PET (Eastar Bio GP Copolyester). Test results for the coated composite materials are shown in Table 4.

**Table 4**

| Properties | | |
|---|---|---|
| breathable polymer | EMA | Co-PET |
| composite basis weight (g/m²) | 150 | 153 |
| Breathable polymer film thickness (mil) | 0.65 | 0.75 |
| Grab tensile strength MD (gm) | 23527 | 26827 |
| Grab tensile strength CD (gm) | 18603 | 21597 |
| Elmendorf Tear MD (gm) | 268 | 250 |
| Elmendorf Tear CD (gm) | 270 | 310 |
| smoothness (sheffield units) | 45 | 30 |
| breathability (perm) | 11 | 36 |

The durability (scrubbability and stain resistance) of the two phase non-woven material was compared with the EMA and Co-PET coated composite materials. The results are summarized in Tables 5 and 6. 24 Hour Staining (ASTM F-793, cleaned with Lestoil®)

**Table 5**

| | uncoated non-woven | EMA coated composite material | Co-PET coated composite material |
|---|---|---|---|
| Cold Water | No Stain | No Stain | No Stain |
| Hot Water | No Stain | No Stain | No Stain |
| EtOH 50% | No Stain | No Stain | Removed Ink |
| Vinegar 3% | No Stain | No Stain | Removed Ink |
| NaOH 1% | No Stain | Removed Ink | No Stain |
| HCI 5% | No Stain | No Stain | No Stain |
| Soap Solution | No Stain | Removed Ink | No Stain |
| Detergent Solution | No Stain | Removed Ink | No Stain |
| Orange Juice | Medium Stain | No Stain | No Stain |
| Butter | Slight Stain | No Stain | No Stain |
| Catsup | Medium Stain | No Stain | No Stain |
| Tea | Stain | No Stain | No Stain |
| Coffee | Stain | No Stain | No Stain |
| French's Mustard | Stain | No Stain | Removed Ink |
| BIC Blue Pen | Stain | No Stain | No Stain |
| Betadine Solution | Stain | No Stain | No Stain |
| Red Lipstick | Stain | No Stain | No Stain |
| Black Shoe Polish | Stain | No Stain | No Stain |

### Scrubbability (ASTM F-793, using detergent)

**Table 6**

| material | uncoated two phase nonwoven | EMA coated composite material | Co-PET coated composite material |
|---|---|---|---|
| 100 washes | pass | pass | pass |
| 200 scrubs | pass | pass | pass |

The EMA and Co-PET coated composite materials exhibited desirable strength and breathability characteristics while having superior durability to the uncoated two phase nonwoven.

Different amounts of each of the breathable polymers were coated on the two phase nonwoven and the breathability of the coated composite material was measured. Results of this testing is shown in Table 7.

**Table 7**

| | | | |
|---|---|---|---|
| EMA film add on | 0.5 mil | 0.7 mil | 1.0 mil |
| breathability (perm) | 14 | 11.5 | 8.5 |
| | | | |
| Co-PET film add on | 0.5 mil | 0.85 mil | 1.0 mil |
| breathability (perm) | 49 | 34 | 24 |

The EMA and Co-PET coated composite materials has sufficient breathability (>8 Perm) to meet the Wallcover Association's recommendations for a breathable wallcover material.

It will, of course, be understood that the present invention has been described above purely by way of example and that modifications of detail can be made within the scope of the invention.

## Claims

1. A composite material for use as a base in a wallcovering, comprising a substrate layer that is permeable to water vapor, wherein the substrate layer comprises a nonwoven material comprising cellulose fibers; and a coating layer that is permeable to water vapor such that the composite material has a water vapor transmission rate of at least 30 g/m² 24 h at 25°C/75% RH, wherein the coating layer comprises a plastics material, which plastics material consists essentially of a copolymer of an olefin and a member selected from alkyl acrylate, alkyl methacrylate and mixtures thereof, the plastics material having particles of filler distributed therein.

2. A composite material according to claim 1, in which the nonwoven material also comprises synthetic fibers.

3. A composite material according to claim 1, in which the nonwoven material is bonded with a resin binder.

4. A composite material according to claim 1, in which the nonwoven material comprises an opacity-increasing filler.

5. A composite material according to claim 1 in which the filler is present in the coating layer in an amount of up to 40% by weight of the filled plastics material in the coating layer.

6. A composite material comprising:
a nonwoven substrate comprising about 20 percent to about 50 percent cellulose fibers and about 10 percent to about 40 percent staple length synthetic fibers, the nonwoven substrate having a basis weight of about 30 gsm to about 200 gsm; and
a microporous breathable polymer film or a monolithic breathable polymer film laminated to the nonwoven substrate;
wherein the composite material has a breathability of at least 8 Perm.

7. The composite material of claim 6 wherein the monolithic breathable polymer film is extrusion coated to the nonwoven substrate.

8. The composite material of claim 6 wherein the monolithic breathable polymer film is laminated to the nonwoven substrate without the use of adhesives.

9. The composite material of claim 6 wherein the nonwoven material includes a first phase adjacent a first side and comprising cellulose fibers and substantially no synthetic fibers overlying a second phase adjacent an opposing second side and comprising cellulose fibers and synthetic staple fibers.

10. The composite material of claim 6 wherein the monolithic breathable polymer film comprises at least one of ethyl methyl acrylate (EMA), polyester or co-polyester.

11. The composite material of claim 6 wherein the monolithic breathable polymer film consists essentially of at least one of ethyl methyl acrylate (EMA), polyester or co-polyester.

12. The composite material of claim 6 wherein the monolithic breathable polymer film is substantially non-porous and is substantially free of filler material.

13. The composite material of claim 6 wherein the monolithic breathable polymer film has a thickness of about 13 microns to about 26 microns.

14. The composite material of claim 6 wherein the monolithic breathable polymer film has a basis weight of about 12 gsm to about 47 gsm.

15. A breathable wallcovering, comprising
a nonwoven substrate comprising about 20 percent to about 50 percent cellulose fibers, about 10 percent to about 40 percent staple length synthetic fibers, about 10 percent to about 35 percent filler material and a resin binding the fibers, the nonwoven substrate having a basis weight of about 30 gsm to about 200 gsm; and
a microporous breathable polymer film or a monolithic breathable polymer film joined to a side of the nonwoven substrate, the wallcovering having a breathability of at least 8 Perm when measured according to ASTM method 96 E; upright cup at 50% relative humidity and 70°F.

16. The breathable wallcovering of claim 15 wherein the monolithic breathable polymer film consists essentially of at least one of ethyl methyl acrylate (EMA), polyester or co-polyester.

17. The breathable wallcovering of claim 15 wherein the monolithic breathable polymer film is melted and applied to the nonwoven substrate as a molten film.

18. The breathable wallcovering of claim 15 wherein the nonwoven material includes a first phase adjacent one side and comprising cellulose fibers and substantially no synthetic fibers overlying a second phase adjacent an opposing side and comprising cellulose fibers and synthetic staple fibers.

19. The breathable wallcovering of claim 15 wherein the monolithic breathable polymer film is substantially non-porous, is substantially free of filler material, has a thickness of about 13 microns to about 26 microns, a basis weight of about 12 gsm to about 47 gsm ;

20. A composite material according to claim 1 in which the plastics material is substantially homogeneous.

21. A composite material according to claim 6 in which the microporous breathable polymer film or the monolithic breathable polymer film is substantially homogeneous.

22. The breathable wall covering of claim 15 in which the microporous breathable polymer film or the monolithic breathable polymer film is substantially homogeneous.

23. The breathable wall covering of claim 15 or 22 in which the polymer is melted and applied to the nonwoven substrate as a molten film.

24. The breathable wall covering of claim 15 or 22 in which the monolithic breathable polymer film is applied to the nonwoven substrate.
